# EUROPEAN PATENT SPECIFICATION

(11) **EP 2 322 575 B1**
(45) Date of publication and mention of the grant of the patent: **26.11.2014**
(21) Application number: 09811438.2
(22) Date of filing: 27.08.2009
(51) Int. Cl.: C08L 27/12, C08J 3/24, C08K 3/38, C08K 5/053

(54) **FLUORORUBBER COMPOSITION AND PROCESS FOR PRODUCING CROSSLINKED FLUORORUBBER**
FLUORKAUTSCHUKZUSAMMENSETZUNG UND HERSTELLUNGSVERFAHREN FÜR VERNETZTEN FLUORKAUTSCHUK
COMPOSITION DE CAOUTCHOUC FLUORÉ ET PROCÉDÉ DE FABRICATION D'UN CAOUTCHOUC FLUORÉ RÉTICULÉ

(30) Priority: 04.09.2008 JP 2008226930
(43) Date of publication of application: 18.05.2011
(73) Proprietor: NOK Corporation, Minato-ku Tokyo 105-8585 (JP)
(72) Inventor: KASHIHARA Takayuki, Fujisawa-shi Kanagawa 251-0042 (JP); IWAKI Hirokazu, Fujisawa-shi Kanagawa 251-0042 (JP); WATANABE Muneyuki, Fujisawa-shi Kanagawa 251-0042 (JP); ITO Yukinori, Fujisawa-shi Kanagawa 251-0042 (JP)
(74) Representative: Gulde & Partner
(86) International application number: PCT/JP2009/064952
(87) International publication number: WO 2010/026912

(56) References cited:
- EP-A1- 1 953 190
- EP-A1- 1 972 654
- WO-A1-2004/094479
- WO-A1-2007/058038
- DE-A1- 3 915 318
- JP-A- 1 306 454
- US-A1- 2006 217 491

## Description

### Technical Field

The present invention relates to a fluororubber composition and a method for producing a cross-linked fluororubber product, and more particularly, to a fluororubber composition which is non-tacky to metal(s) and has a higher cleanliness, and a method for producing a cross-linked fluororubber product.

### Background Art

Since fluororubbers conventionally have rubber elasticities as properties inherent in rubbers similarly to other general-purpose rubbers and have been excellent in properties such as heat resistance, oil resistance, and chemical resistance as compared to other general-purpose rubbers, fluororubbers have been adopted in various usages by utilizing the above properties, as leakproof rubber parts represented by O-rings, packings, gaskets, and the like, vibration-proof rubbers, belts, and rubber coated fabrics, and as shock absorbing stopper parts such as head controllers of printer heads, and hard disk drives (HDD), more specifically, as stoppers to be provided for the purpose of exemplarily restricting malfunctions of reading arms in HDD drives.

Such conventional fluororubbers are tacky at rubber surfaces, and are therefore sometimes subjected to treatments by antitack agents at crosslinked rubber surfaces upon production of the fluororubbers. However, this can not be regarded as an optimum way, due to the increased treatment costs, and due to a concern about contaminations or the like by dropout of the antitack agents toward vicinities of the regions where the fluororubbers are used.

Further, exemplary adoption of the conventional fluororubbers as shock absorbing stopper parts for HDD head controllers, results in a problem of malfunctions due to adhesion between stoppers and arms.

Here, the term "stopper" means a part provided for the purpose of: defining a limit position (arm swung position) of a recording/reading head portion provided at an end of an arm when the arm is kept standby; and exemplarily absorbing a shock so as to restrict malfunctions of the arm, after an action of the arm or during standby of the arm.

Moreover, examples of such stoppers increasingly used in recent years include a stopper of a magnet holder type configured to incorporate a magnet into a rubber in a manner to fix an arm by a magnetic force, and a stopper of a crush stop type including stopper members arranged at both sides of an arm, respectively.

Meanwhile, it is a recently progressed tendency to decrease amounts of halogens (particularly, chlorine and bromine) in the whole fields of electric and electronic components, so that shock absorbing stopper parts for HDD head controllers are also required to be less in halogen substances included therein.

In view of these points, examples of performances or physical properties required for cross-linked rubber products for stoppers include the following four items:
(1) to be excellent in shock absorbing property upon collision with an arm;
(2) to be non-tacky to the arm (metal) (i.e., to exhibit non-tackiness to the arm), though the rubber and the arm (metal) are required to be kept pressed to each other such as by a magnetic force during standby of the arm;
(3) to be clean; and
(4) to be free of halogen substance (chlorine).

Patent Document 1 has found out that a lower friction can be attained by using, for a polyol-crosslinkable fluororubber, bisphenol AF as a crosslinking agent and triphenylbenzylphosphonium chloride as a crosslinking accelerator.

However, although this technique is not so problematic in the points of (1) shock absorbing property, (2) non-tackiness, and (3) cleanliness, this technique entails chlorine in the crosslinking accelerator, thereby failing to fully meet the requirements.

Patent Document 2 has proposed a fluororubber composition comprising a polyol-crosslinkable fluororubber, in a manner to use bisphenol AF as a crosslinking agent, and 5-benzyl-1,5-diazabicyclo[4.3.0]-5-nonenium tetrafluoroborate as a crosslinking accelerator, wherein the crosslinking accelerator and the polyol crosslinking agent are included at a weight ratio X (quaternary ammonium salt/polyol crosslinking agent) of 0.40 to 0.60, and wherein the crosslinking accelerator and the crosslinking agent are contained in blending amounts of 0.95 to 20 parts by weight and 0.4 to 20 parts by weight based on 100 parts by weight of the fluororubber, respectively.

However, although this technique is not so problematic in the points of (1) shock absorbing property, and (4) absence of halogen, the composition is considerably varied in tackieness, and this technique tends to fail to meet a requirement at a higher level from a viewpoint of cleanliness such as a value of eluted ions and a value measured by an LPC (liquid particle counter) under the circumstances that contamination control is increasingly emphasized mainly with respect to chemical contamination of HDD-related parts correspondingly to increased recording densities of HDD.
Patent Document 1: WO 2004/094479
Patent Document 2: WO 2007/058038

Documents EP 1 972 654, EP 1 953 491, US 2006/217491 and DE 39 15 318 relate to fluororubber compositions which comprise the same compounds as the composition of present claim 1, however with amounts of crosslinking agent and tetrafluoroborate salt which are outside of the claimed ranges. In some of them no value within said ranges is disclosed, in others a multiple selection is necessary.

### Disclosure of the Invention

### Problem to Be Solved by the Invention

Accordingly, an object of the present invention is to provide a fluororubber composition which (1) achieves an excellent shock absorbing property upon collision with an arm, (2) achieves non-tackiness, (3) is clean, and (4) is free of halogen substance (chlorine); a method for producing a cross-linked fluororubber product; and a shock absorbing stopper.

Other objects of the invention will become apparent from the following description.

### Means for Solving the Problem

A fluororubber composition according to the invention for solving the above-described problem comprises:
a polyol-crosslinkable fluororubber comprising a fluoropolymer;
a polyol crosslinking agent; and
a salt having BF₄⁻ as a counter ion;
wherein the polyol crosslinking agent is included as an effective component in an amount of 1.75 to 2.5 parts by weight based on 100 parts by weight of the fluoropolymer; and
wherein the salt having BF₄⁻ as a counter ion is included in an amount of 0.700 to 0.900 part by weight based on 100 parts by weight of the fluoropolymer.

A method for producing a cross-linked fluororubber product according to the invention for solving the above-described problem comprises:
previously polyol-crosslinking the above-recited fluororubber composition; and
subsequently heat-treating the resulting crosslinked fluororubber composition at a temperature ranging from 200°C to 300°C for 0.1 to 48 hours, to obtain a cross-linked product.

Preferable configurations of the invention reside in that the cross-linked product obtained by the above-recited method:
(1) exhibits a holding-torque increased ratio of 30% or less in an averaged manner;
(2) exhibits fine dusts in an amount of 6.0k Count/cm² or less as measured by a liquid particle counter (residual dust measuring device); or
(3) exhibits total amounts of negative ions and positive ions in amounts of 0.3µg/cm² or less, respectively, as measured by an ion chromatograph (residual ion measuring device).

In the invention, it is more preferable that the obtained cross-linked product possesses all of these properties.

A shock absorbing stopper according to the invention for solving the above-described problem is formed by using the cross-linked fluororubber product obtained by the above-recited method.

### Effects of the Invention

The present invention provides a fluororubber composition which (1) achieves an excellent shock absorbing property upon collision with an arm, (2) achieves non-tackiness, (3) is clean, and (4) is free of halogen substance (chlorine); a method for producing a cross-linked fluororubber product; and a shock absorbing stopper.

### Best Mode for Carrying Out the Invention

Embodiments of the present invention are described below.

### [Fluororubber Composition]

The fluororubber composition of the invention comprises a polyol-crosslinkable fluororubber comprising a fluoropolymer; a polyol crosslinking agent; and a salt having BF₄⁻ as a counter ion.

### <Polyol-Crosslinkable Fluororubber>

A polymer or copolymer of one or more fluorine-containing olefins can be used as a polyol-crosslinkable fluororubber (a polyol-crosslinking fluororubber).

Specific examples of fluorine-containing olefins include vinylidene fluoride, hexafluoropropylene, pentafluoropropylene, trifluoroethylene, trifluorochloroethylene, tetrafluoroethylene, vinyl fluoride, perfluoroacrylic esters, perfluoroalkyl acrylates, perfluoromethyl vinyl ether, and perfluoropropyl vinyl ether.

Preferable examples of the polyol-crosslinking fluororubber include vinylidene fluoride-hexafluoropropylene binary copolymer (abbreviation: VDF-HFP), tetrafluoroethylene-propylene binary copolymer (abbreviation: TFE-P), and vinylidene fluoride-hexafluoropropylene-tetrafluoroethylene ternary copolymer (abbreviation: VDF-HFP-TFE).

These fluororubbers can be obtained by solution polymerization, suspension polymerization, or emulsion polymerization according to conventionally known methods, and are commercially available ("Viton A500" manufactured by DuPont, for example).

### <Crosslinking agent>

2,2-bis(4-hydroxyphenyl)perfluoropropane (bisphenol AF) is preferably used as a polyol crosslinking agent, which may be in the form of an alkali metal salt or alkaline earth metal salt.

Concerning the polyol crosslinking agent, it is also possible to use a commercially available master batch containing a raw rubber and bisphenol AF. Examples of commercially available master batches include CURATIVE VC #30 (manufactured by DuPont Dow Elastomers, containing 50wt% of a crosslinking agent [bisphenol AF]).

### <Crosslinking Accelerator>

As the salt having BF₄⁻ (tetrafluoroborate ion) as a counter ion for use as a crosslinking accelerator in the invention, a quarternary ammonium salt can be used represented by general formula (1) below:

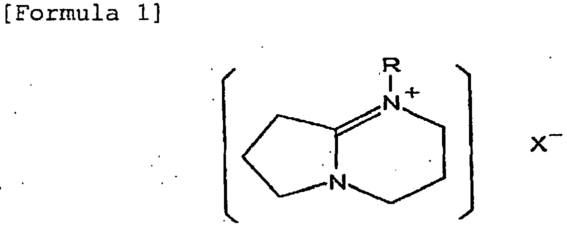

wherein R represents a C₁-C₂₄ alkyl group or a C₇-C₂₀ aralkyl group; and X⁻ represents a BF₄⁻ group (tetrafluoroborate group).

Preferable examples of the quarternary ammonium salt include 5-benzyl-1,5-diazabicyclo[4.3.0]-5-nonenium tetrafluoroborate.

5-benzyl-1,5-diazabicyclo[4.3.0]-5-nonenium tetrafluoroborate is desirable from a viewpoint of improved dispersibility, because it has a melting point of about 80°C and easily melts during heat kneading (100°C) using a roll, a kneader, or a Banbury mixer.

In the invention, the salt having BF₄⁻ as a counter ion also has an effect for improving non-tackiness.

Concerning the salt having BF₄⁻ as a counter ion for use in the invention, it is also possible to use a commercially available master batch containing a raw fluororubber and a quarternary ammonium salt.

### <Other Blending Components>

In the invention, components generally used in the rubber industry may be added in addition to the above components, as required, as other blending components within a range such that the effects of the invention are not impaired. Examples of other blending components include reinforcing agents such as carbon black and carbon fiber; fillers such as hydrotalcite (Mg₆Al₂(OH)₁₆CO₃), calcium carbonate, magnesium carbonate, aluminium hydroxide, magnesium hydroxide, aluminium silicate, magnesium silicate, calcium silicate, potassium titanate, titanium oxide, barium sulfate, aluminum borate, glass fiber, aramid fiber, and the like; processing aids such as waxes, metallic soaps, and the like; acid acceptors such as calcium hydroxide, magnesium oxide, zinc oxide; antioxidants; thermoplastic resins; etc.

### <Blending Ratio>

The blending amount of the polyol crosslinking agent is in a range of 1.75 to 2.5 parts by weight as an effective component based on 100 parts by weight of the fluoropolymer.

Herein, the expression of "effective component" is used to take account of a situation to use a masterbatch containing the polyol crosslinking agent mixed with a raw rubber.

For example, in order to achieve the amount of the polyol crosslinking agent in a range of 1.75 to 2.5 parts by weight as an effective component when the polyol crosslinking agent is contained in an amount of 50wt% in a masterbatch, the masterbatch is blended in a range of 3.5 to 5.0 parts by weight.

The blending amount of the crosslinking accelerator composed of the salt having BF₄⁻ as a counter ion is in a range of 0.700 to 0.900 part by weight based on 100 parts by weight of the fluoropolymer. Amounts less than 0.700 part by weight lead to foaming of a crosslinked product, thereby possibly failing to be molded. Amounts more than 0.900 part by weight lead to degradation (increase) of a holding-torque increased ratio correspondingly to an increase of the blending amount, thereby failing to meet values of 30% or less and thus resulting in inferior non-tackiness. Similarly, ion amounts to be detected by an ion chromatograph are deteriorated (increased) correspondingly to an increase of the blending amount, thereby failing to meet values of 0.3µg/cm² or less, and LPC values are also deteriorated (increased) correspondingly to the increase of the blending amount, thereby failing to meet values of 6.0k Count/cm² or less by LPC, such that both deteriorations imply inferior cleanliness.

### <Preparation>

Examples of methods for preparing the fluororubber composition according to the invention include a method in which predetermined amounts of the above-described components are kneaded using a closed kneader such as an intermix, a kneader, or a Banbury mixer, or using a general kneader for rubber such as an open roll mill; a method in which each component is dissolved in a solvent and dispersed with a stirrer or the like; and so forth.

### [Method for Producing Crosslinked Fluororubber Product]

### <Primary Crosslinking (vulcanization)>.

The fluororubber composition obtained as described above can be crosslinked (vulcanized) and molded by heating (Primary Crosslinking (vulcanization)) typically at a temperature of 140°C to 230°C for 1 to 120 minutes, using an injection molding machine, a compression molding machine, a crosslinking (vulcanizing) press, or an oven.

Although the primary crosslinking (vulcanization) is a process of crosslinking the fluororubber composition to such a degree that its shape can be maintained to form (preform) a certain shape, and primary crosslinking (vulcanization) can also be performed in an air oven or the like, the composition is preferably molded with a mold in the case of a complicated shape.

In the invention, when a fluororubber composition is kneaded and then the resulting processed product is compression molded, the composition after kneading may typically be compression molded by (a) cooling back to room temperature once and heating again, or (b) heating continuously after kneading. In the compression step using a compression molding machine, the method (a) above is typically employed.

If the fluororubber composition is preformed into a certain shape before crosslinking (vulcanization), a low-friction and low-tackiness article can be obtained by either of the method (a) or (b). The degree of low-tackiness of the obtained cross-linked fluororubber product is not influenced by details of a temperature elevation pattern, a temperature elevation curve preceding to a heat treatment, but determined by a temperature and a time for performing the heat treatment.

### <Heat Treatment>

In the invention, a heat treatment (secondary crosslinking (vulcanization)) is performed after the primary crosslinking (vulcanization). Although this heat treatment method is the same as usual secondary crosslinking (vulcanization), unless the fluororubber composition of the invention is used, a cross-linked fluororubber product, having higher cleanliness and capable of realizing a rubber surface which is non-tacky to metal(s), cannot be obtained even if usual secondary crosslinking (vulcanization) is performed.

As the heat treatment after primary crosslinking (vulcanization), the fluororubber composition (primary cross-linked product) of the invention is heated to a temperature in a range of 200°C to 300°C, and preferably in a range of 250°C to 260°C. The heat-treatment time is from 0.1 to 48 hours, preferably 1 to 48 hours, and more preferably 10 to 48 hours.

### <Physical Properties and Usage of Cross-linked Fluororubber Product>

The cross-linked fluororubber product obtained in this way exhibits a holding-torque increased ratio of 30% or less in an averaged manner, and is less tacky to metal(s).

In the present specification, the "holding-torque increased ratio" implies an index related to non-tackiness, which can be measured in the following manner.

A molded stopper (of magnet holder type) was mounted in an actual HDD, and the stopper and an arm were kept engaged with each other by a magnetic force, followed by application of an environment load (temperature of 80°C, and relative humidity of 80% RH) for 10 hours. Detaching forces for separating the arm from the stopper by rotating the arm were compared between before and after application of the environment load, and an increased ratio of the detaching force after application of the environment load relative to that before application of the environment load was calculated by the following equation.

Holding-torque increased ratio (%)=[("detaching force after application of environment load"-"detaching force before application of environment load")/"detaching force before application of environment load"]×100

The cross-linked product obtainable by the invention is not only less in holding-torque increased ratio but also less in variance (3σ) of the increased ratio, and is thus excellent in non-tackiness.

Further, the cross-linked product obtainable by the invention has a higher cleanliness, because the cross-linked product is characterized in that it exhibits fine dusts in an amount of 6.0k Count/cm² or less as measured by a liquid particle counter (residual dust measuring device).

In the present specification, "fine dusts measured by a liquid particle counter (LPC; residual dust measuring device)" imply an index related to cleanliness, which can be measured in the following manner.

A molded stopper is placed into a glass beaker filled with pure water filtered by a filter, followed by ultrasonic cleaning for 1 minute, and then particles (particulates) of 0.5µm or larger extracted into the pure water in the beaker are measured by a submerged particle sensor.

Smaller amounts of particles imply cleaner materials, and materials resulting in amounts of 6.0k Count/cm² or less by LPC can be regarded as being clean.

Moreover, the cross-linked product obtainable by the invention has a higher cleanliness, because the cross-linked product is characterized in that it exhibits total amounts of negative ions and positive ions in amounts of 0.3µg/cm² or less, respectively, as measured by an ion chromatograph (residual ion measuring device).

In the present specification, "total amounts of negative ions and positive ions as measured by an ion chromatograph (residual ion measuring device)" imply an index related to cleanliness, which can be measured in the following manner.

A molded stopper is immersed into ultrapure water at an ordinary temperature for 10 minutes, and ions contained in the immersing liquid are measured by an ion chromatograph.

Smaller amounts of ions imply cleaner materials, and materials resulting in amounts of 0.3µg/cm² or less for both negative ions (anions) and positive ions (cations) per one stopper can be regarded as being clean.

The cross-linked product of the invention meet all the four conditions (1) to be excellent in shock absorbing property upon collision with an arm, (2) to be non-tacky to the arm (metal) (i.e., to exhibit non-tackiness to the arm), though the rubber and the arm (metal) are required to be kept pressed to each other such as by a magnetic force during standby of the arm, (3) to be clean, and (4) to be free of halogen substance (chlorine). Accordingly, the cross-linked product can be utilized for a fluororubber product required to have cleanliness at a higher level such as related to a value of eluted ions and a value measured by an LPC (liquid particle counter) under the circumstances that contamination control is increasingly emphasized mainly with respect to chemical contamination of HDD-related parts, and particularly, the cross-linked product can be preferably used as a shock absorbing stopper part for a head controller in a hard disk drive.

### [Examples]

Examples of the present invention are hereinafter described; however, the invention is not limited by the Examples.

### Example 1

Fluororubber comprising fluoropolymer: ("Viton A-500" manufactured by DuPont Dow Elastomers; Mooney viscosity ML₁₊₁₀ (121°C) : 45)
   100 parts by weight
MT carbon: ("Huber N-990" manufactured by Huber, average particle diameter: 500 nm, specific surface area: 6 m²/g)
   15 parts by weight
Hydrotalcite ("DHT-4A" manufactured by Kyowa Chemical Industry Co., Ltd.)
   3 parts by weight
Calcium hydroxide ("CALDIC #2000" manufactured by Ohmi Chemical Industry, Ltd.)
   3 parts by weight
Crosslinking agent: bisphenol AF (a masterbatch of 50wt% of "CURATIVE VC #30" and 50wt% of fluororubber "Viton E-45", manufactured by DuPont Dow Elastomers)
   5 parts by weight (note: thrown into a roll)
Crosslinking accelerator: 5-benzyl-1,5-diazabicyclo[4.3.0]-5-nonenium tetrafluoroborate
   0.700 part by weight (note: thrown into a roll)

The above-listed components (except for the crosslinking components) were thrown into a kneader and kneaded for 20 minutes, after which the crosslinking components were thrown into an open roll mill, thereby preparing a fluororubber composition.

The resulting composition was pressurized and crosslinked (vulcanized) at 170°C for 20 minutes to mold a crosslinked product, and secondary crosslinking (vulcanization) was further performed in an oven at 260°C for 10 hours, thereby producing a cross-linked fluororubber product.

### <Evaluation>

### 1. Rubber hardness, breaking strength, and breaking elongation

A rubber hardness, a breaking strength, and a breaking elongation of a test sample of the obtained cross-linked fluororubber product were measured by the following method, and the results are shown in Table 1.
Rubber hardness: measured by a type-A durometer according to JIS K6253
Breaking strength (MPa): measured according to JIS K6251
Breaking elongation (%): measured according to JIS K6251

### 2. Non-tackiness: Tackiness test for holding-torque increased ratio

A molded stopper (of magnet holder type) was mounted in an actual HDD, and the stopper and an arm were kept engaged with each other by a magnetic force, followed by application of an environment load (temperature of 80°C, and relative humidity of 80% RH) for 10 hours. Detaching forces for separating the arm from the stopper by rotating the arm were compared between before and after application of the environment load, and an increased ratio of the detaching force after application of the environment load relative to that before application of the environment load was calculated by the following equation. The results are shown in Table 1.

Holding-torque increased ratio (%)=[("detaching force after application of environment load"-"detaching force before application of environment load")/"detaching force before application of environment load"]×100

Smaller values of holding-torque increased ratios can be regarded as being more excellent in non-tackiness, and smaller variances (3σ) can also be regarded as being more excellent in non-tackiness, such that values of 30% or less are desirable for the former.

"σ" means a standard deviation, and a value which is three times the standard deviation is represented as 3σ. Typically, 99.7% or more of all measured values are included within a range of an averaged value ±3σ, and the value of 3σ is a rough standard representing a variance.

### 3. Cleanliness

### 3-1. Measurement by liquid particle counter (LPC; residual dust measuring device)

A molded stopper was placed into a glass beaker filled with pure water filtered by a filter, followed by ultrasonic cleaning, and then particles of 0.5µm or larger extracted into the pure water in the beaker were measured by a submerged particle sensor (KS-28 manufactured by RION Co., Ltd.). The result is shown in Table 1.

Smaller amounts of particles imply cleaner materials, and materials resulting in amounts of 6.0k Count/cm² or less can be regarded as being clean.

### 3.2 Measurement by ion chromatograph (residual ion measuring device)

A molded stopper was immersed into ultrapure water at an ordinary temperature for 10 minutes, and ions contained in the immersing liquid were measured by an ion chromatograph (DX-120 manufactured by DIONEX Corporation). The results are shown in Table 1.

Smaller amounts of ions imply cleaner materials, and amounts of 0.3µg/cm² or less for both negative ions (anions) and positive ions (cations) per one stopper are desirable.

### 4. Presence/absence of halogen inclusion

A fact based on the rubber composition is shown in Table 1.

### Example 2

Evaluation was performed in the same manner as Example 1, except that the blending amount of the crosslinking accelerator (5-benzyl-1,5-diazabicyclo[4.3.0]-5-nonenium tetrafluoroborate) was changed to 0.875 part by weight. The results are shown in Table 1.

### Example 3

Evaluation was performed in the same manner as Example 1, except that the blending amount of the crosslinking accelerator (5-benzyl-1,5-diazabicyclo[4.3.0]-5-nonenium tetrafluoroborate) was changed to 0.900 part by weight. The results are shown in Table 1.

### Comparative Example 1

Although the same procedure as Example 1 was performed except that the blending amount of the crosslinking accelerator (5-benzyl-1,5-diazabicyclo[4.3.0]-5-nonenium tetrafluoroborate) was changed to 0.525 part by weight, the amount of the accelerator was less and foaming of a crosslink (vulcanizate) was caused, thereby failing to achieve molding. The results are shown in Table 1.

### Comparative Example 2

Evaluation was performed in the same manner as Example 1, except that the blending amount of the crosslinking accelerator (5-benzyl-1,5-diazabicyclo[4.3.0]-5-nonenium tetrafluoroborate) was changed to 0.950 part by weight. The results are shown in Table 1.

### Comparative Example 3

Evaluation was performed in the same manner as Example 1, except that the blending amount of the crosslinking accelerator (5-benzyl-1,5-diazabicyclo[4.3.0]-5-nonenium tetrafluoroborate) was changed to 1.050 parts by weight. The results are shown in Table 1.

### Comparative Example 4

Evaluation was performed in the same manner as Example 1, except that the blending amount of the crosslinking accelerator (5-benzyl-1,5-diazabicyclo[4.3.0]-5-nonenium tetrafluoroborate) was changed to 1.225 parts by weight. The results are shown in Table 1.

### Comparative Example 5

Evaluation was performed in the same manner as Example 1, except that the crosslinking accelerator (5-benzyl-1,5-diazabicyclo[4.3.0]-5-nonenium tetrafluoroborate) was changed to benzyltriphenylphosphonium chloride (9 parts by weight of a masterbatch of 33wt% of "CURATIVE VC #20": benzyltriphenylphosphonium chloride, and 67wt% of fluororubber "Viton E-45", manufactured by DuPont Dow Elastomers). The results are shown in Table 1.

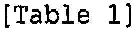

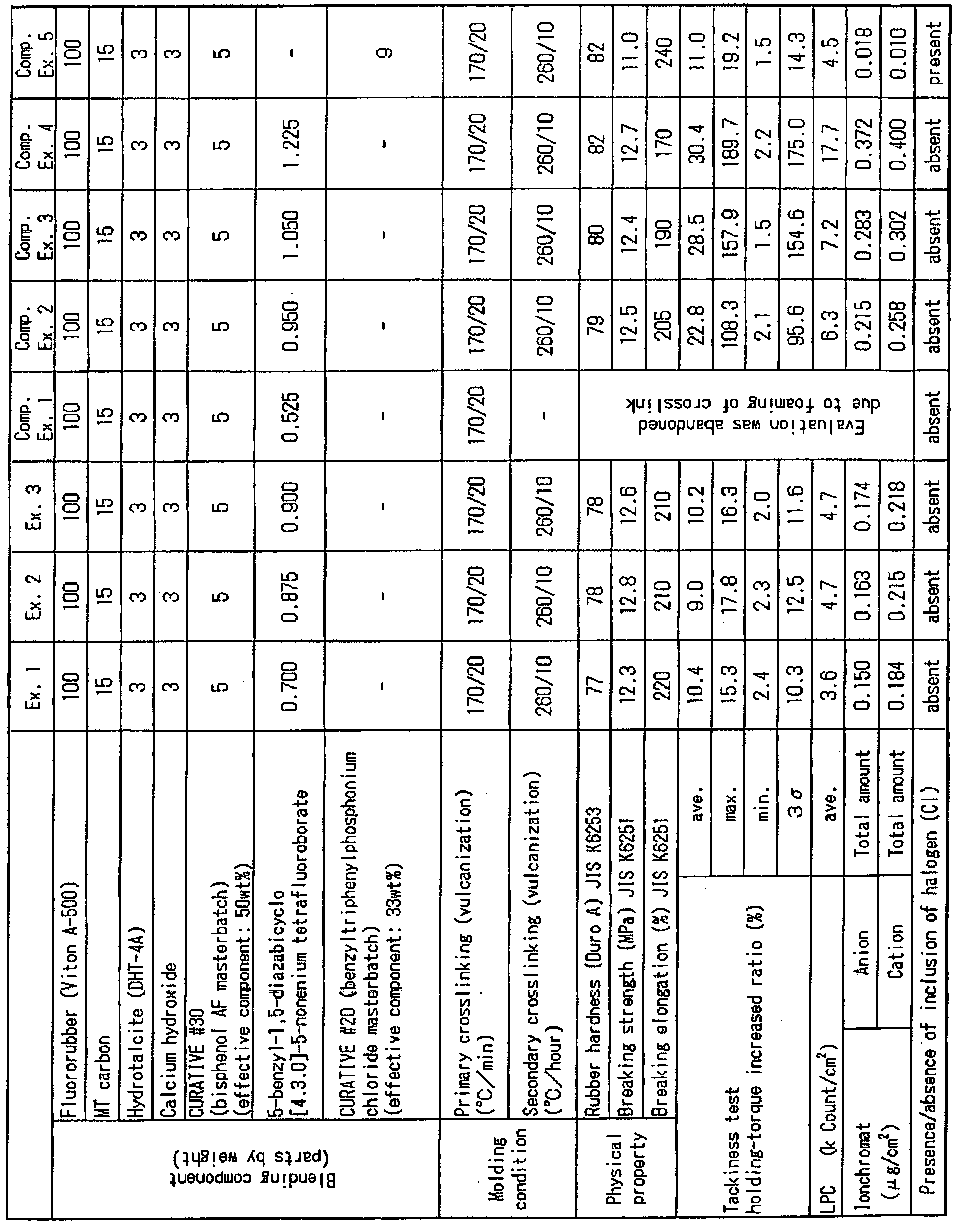

It is seen from the results of Examples 1, 2, and 3 that stoppers are obtainable which exhibit holding-torque increased ratios of 30% or less and which are less in variance, when the amounts of 5-benzyl-1,5-diazabicyclo[4.3.0]-5-nonenium tetrafluoroborate are within a range of 0.700 to 0.900 part by weight.

Also, values by LPC as an index of cleanliness were 6.0k Count/cm² or less, and total amounts of negative ions and positive ions as ion amounts detected by an ion chromatograph were 0.3µg/cm² or less, respectively, in these Examples.

Contrary, when 5-benzyl-1,5-diazabicyclo[4.3.0]-5-nonenium tetrafluoroborate was blended in an amount of 0.525 part by weight (Comparative Example 1), the accelerator was less and foaming of a crosslink (vulcanizate) was thus caused, thereby failing to achieve molding.

Further, when 5-benzyl-1,5-diazabicyclo[4.3.0]-5-nonenium tetrafluoroborate was blended in amounts of 0.950 part by weight (Comparative Example 2), 1.050 parts by weight (Comparative Example 3), and 1.225 parts by weight (Comparative Example 4), respectively, holding-torque up ratios were deteriorated (increased) with increased blending amounts, thereby failing to meet values of 30% or less. It is seen that ion amounts detected by an ion chromatograph and values by LPC were also deteriorated (increased) with increased blending amounts, thereby failing to meet values of 0.3µg/cm² or less, and 6.0k Count/cm² or less respectively.

Comparative Example 5 used benzyltriphenylphosphonium chloride as a crosslinking accelerator. Although this product is not problematic in the demanded properties such as a holding-torque increased ratio, values by ion chromatograph, and a value by LPC, it contains chlorine in the crosslinking accelerator, thereby failing to achieve decreased amounts of halogen.

## Claims

1. A fluororubber composition comprising:
a polyol-crosslinkable fluororubber comprising a fluoropolymer;
a polyol crosslinking agent; and
a salt having BF₄⁻ as a counter ion;
wherein the polyol crosslinking agent is included as an effective component in an amount of 1.75 to 2.5 parts by weight based on 100 parts by weight of the fluoropolymer; and
wherein the salt having BF₄⁻ as a counter ion is included in an amount of 0.700 to 0.900 part by weight based on 100 parts by weight of the fluoropolymer.

2. A method for producing a crosslinked fluororubber product, comprising:
previously polyol-crosslinking the fluororubber composition according to claim 1; and
subsequently heat-treating the resulting crosslinked fluororubber composition at a temperature ranging from 200°C to 300°C for 0.1 to 48 hours, to obtain a crosslinked product.

3. The method for producing a crosslinked fluororubber product according to claim 2, wherein the crosslinked product obtained by the method exhibits a holding-torque increased ratio of 30% or less in an averaged manner measured as disclosed in the description.

4. The method for producing a crosslinked fluororubber product according to claim 2, wherein the crosslinked product obtained by the method exhibits fine dusts in an amount of 6.0k Count/cm² or less as measured by a liquid particle counter (residual dust measuring device).

5. The method for producing a crosslinked fluororubber product according to claim 2, wherein the crosslinked product obtained by the method exhibits total amounts of negative ions and positive ions in amounts of 0.3µg/cm² or less, respectively, as measured by an ion chromatograph (residual ion measuring device).

6. The method for producing a crosslinked fluororubber product according to claim 2, wherein the crosslinked product obtained by the method:
(1) exhibits a holding-torque increased ratio of 30% or less in an averaged manner;
(2) exhibits fine dusts in an amount of 6.0k Count/cm² or less as measured by a liquid particle counter (residual dust measuring device); and
(3) exhibits total amounts of negative ions and positive ions in amounts of 0.3µg/cm² or less, respectively, as measured by an ion chromatograph (residual ion measuring device).

7. A shock absorbing stopper formed by using the crosslinked fluororubber product obtained by the method according to any one of claims 2 to 6.

## Patentansprüche

1. Fluorkautschuk-Zusammensetzung, umfassend:
einen polyolvemetzbaren Fluorkautschuk, der ein Fluorpolymer umfasst;
ein Polyol-Vernetzungsmittel; und
ein Salz, das BF₄⁻ als Gegenion aufweist;
wobei das Polyol-Vernetzungsmittel als wirksamer Bestandteil in einer Menge von 1,75 bis 2,5 Masseteilen, basierend auf 100 Masseteilen des Fluorpolymers, enthalten ist; und
wobei das Salz, das BF₄⁻ als Gegenion aufweist, in einer Menge von 0,700 bis 0,900 Masseteilen, basierend auf 100 Masseteilen des Fluorpolymers, enthalten ist.

2. Verfahren zur Herstellung eines vernetzten Fluorkautschuk-Produkts, umfassend:
vorheriges Polyolvemetzen der Fluorkautschuk-Zusammensetzung nach Anspruch 1; und
anschließendes Wärmebehandeln der so erhaltenen vernetzten Fluorkautschuk-Zusammensetzung bei einer Temperatur im Bereich von 200°C bis 300°C für 0,1 bis 48 Stunden zum Erhalt eines vernetzten Produkts.

3. Verfahren zur Herstellung eines vernetzten Fluorkautschuk-Produkts nach Anspruch 2, wobei das durch das Verfahren erhaltene vernetzte Produkt im Durchschnitt eine prozentuale Zunahme des Haftmoments von 30 % oder weniger entsprechend der Offenbarung in der Beschreibung aufweist.

4. Verfahren zur Herstellung eines vernetzten Fluorkautschuk-Produkts nach Anspruch 2, wobei das durch das Verfahren erhaltene vernetzte Produkt Feinstäube in einer Menge von 6000 Partikeln/cm² oder weniger, gemessen mit einem Flüssigkeitspartikelzähler (Reststaub-Messvorrichtung), aufweist.

5. Verfahren zur Herstellung eines vernetzten Fluorkautschuk-Produkts nach Anspruch 2, wobei das durch das Verfahren erhaltene vernetzte Produkt Gesamtmengen negativer Ionen bzw. positiver Ionen in Mengen von 0,3 µg/cm² oder weniger, gemessen mit einem Ionenchromatographen (Restionen-Messvorrichtung), aufweist.

6. Verfahren zur Herstellung eines vernetzten Fluorkautschuk-Produkts nach Anspruch 2, wobei das durch das Verfahren erhaltene vernetzte Produkt:
(1) im Durchschnitt eine prozentuale Zunahme des Haftmoments von 30 % oder weniger aufweist;
(2) Feinstäube in einer Menge von 6000 Partikeln/cm² oder weniger, gemessen mit einem Flüssigkeitspartikelzähler (Reststaub-Messvorrichtung), aufweist; und
(3) Gesamtmengen negativer Ionen bzw. positiver Ionen in Mengen von 0,3 µg/cm² oder weniger, gemessen mit einem Ionenchromatographen (Restionen-Messvorrichtung), aufweist.

7. Stoßdämpfendes Anschlagselement, ausgebildet unter Verwendung des durch das Verfahren nach einem der Ansprüche 2 bis 6 erhaltenen vernetzten Fluorkautschuk-Produkts.

## Revendications

1. Un composé de caoutchouc fluoré, comprenant :
un caoutchouc fluoré réticulable par polyol comprenant un fluoropolymère ;
un agent de réticulation polyol ; et
un sel ayant BF₄⁻ comme contre-ion ;
l'agent de réticulation polyol étant inclus comme composant efficace à hauteur de 1,75 à 2,5 parties en poids, sur la base de 100 parties en poids de fluoropolymère ; et
le sel ayant BF₄⁻ comme contre-ion étant inclus à hauteur de 0,700 à 0,900 parties en poids, sur la base de 100 parties en poids de fluoropolymère.

2. Une méthode pour produire un produit de caoutchouc fluoré réticulé, comprenant :
réticuler par polyol au préalable le composé de caoutchouc fluoré selon la revendication 1 ; et
soumettre à un traitement thermique le composé de caoutchouc fluoré réticulé résultant, à une température de 200 °C à 300 °C, de 0,1 à 48 heures, afin d'obtenir un produit réticulé.

3. La méthode pour produire un produit de caoutchouc fluoré réticulé selon la revendication 2, le produit réticulé obtenu par la méthode présentant un rapport de couple de maintien augmenté de 30 % ou moins en moyenne, moyenné tel que divulgué dans la description.

4. La méthode pour produire un produit de caoutchouc fluoré réticulé selon la revendication 2, le produit réticulé obtenu par la méthode présentant des poussières fines à hauteur de 6,0 k/cm² ou moins, tel que mesuré par un compteur de particules liquides (appareil de mesure de poussières résiduelles).

5. La méthode pour produire un produit de caoutchouc fluoré réticulé selon la revendication 2, le produit réticulé obtenu par la méthode présentant des quantités totales d'ions négatifs et d'ions positifs à hauteur de 0,3µg/cm² ou moins, respectivement, tel que mesuré par un chromatographe ionique (appareil de mesure d'ions résiduels).

6. La méthode pour produire un produit de caoutchouc fluoré réticulé selon la revendication 2, le produit réticulé obtenu par la méthode :
(1) présentant un rapport de couple de maintien augmenté de 30 % ou moins en moyenne ;
(2) présentant des poussières fines à hauteur de 6,0 k/cm² ou moins tel que mesuré par un compteur de particules liquides (appareil de mesure de poussières résiduelles) ; et
(3) présentant des quantités totales d'ions négatifs et d'ions positifs à hauteur de 0,3µg/cm² ou moins, respectivement,
tel que mesuré par un chromatographe ionique (appareil de mesure d'ions résiduels).

7. Un bouchon absorbant les chocs formé en utilisant le produit de caoutchouc fluoré réticulé obtenu par la méthode selon l'une quelconque des revendications 2 à 6.
